**Europäisches Patentamt**

**European Patent Office**

**Office européen des brevets**

(19)

(11) Veröffentlichungsnummer : **0 028 615**
**B1**

(12) # EUROPÄISCHE PATENTSCHRIFT

(45) Veröffentlichungstag der Patentschrift :
**11.05.83**

(51) Int. Cl.³ : **B 23 K 26/02**, B 23 K 26/08

(21) Anmeldenummer : **80900910.3**

(22) Anmeldetag : **06.05.80**

(86) Internationale Anmeldenummer :
**PCT/DE 80/00056**

(87) Internationale Veröffentlichungsnummer :
**WO WO/80023 (13.11.80 Gazettee 80/26)**

(54) VORRICHTUNG ZUR BEHANDLUNG EINES SUBSTRATES MITTELS LASERSTRAHLEN.

(30) Priorität : **07.05.79 DE 2918283**

(43) Veröffentlichungstag der Anmeldung :
**20.05.81 Patentblatt 81/20**

(45) Bekanntmachung des Hinweises auf die Patenterteilung : **11.05.83 Patentblatt 83/19**

(84) Benannte Vertragsstaaten :
**AT CH DE FR GB LI LU NL SE**

(56) Entgegenhaltungen :
**FR A 2 130 698**
**FR A 2 375 964**
**IBM Technical Disclosure Bulletin, Band 15, no. 2, Juli 1972, Armonk, New York (US), R. L. Garwin : « Optics for beam addressable files » Seiten 494 und 495**

**Die Akte enthält technische Angaben, die nach dem Eingang der Anmeldung eingereicht wurden und die nicht in dieser Patentschrift enthalten sind.**

(73) Patentinhaber : **CARL BAASEL, LASERTECHNIK KG**
**Sandstrasse 21**
**D-8000 München 2 (DE)**

(72) Erfinder : **LANGHANS, Lutz**
**Kempterstrasse 14**
**D-8135 Starnberg-Söcking (DE)**

(74) Vertreter : **DRes. Kador & Klunker**
**Corneliusstrasse 15**
**D-8000 München 5 (DE)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Vorrichtung zur Behandlung eines Substrates mittels Laserstrahlen

Bei der Anwendung von Lasern zur Behandlung oder Bearbeitung von Substraten taucht häufig das Problem einer gleichzeitigen oder nahezu gleichzeitigen Beaufschlagung des Substrats in mehreren Zielgebieten auf. Die Anwendung mehrerer Laser verbietet sich in der Regel aus Kosten- und Platzgründen. Eine Strahlaufteilung durch sogenannte Strahlteiler ist insofern nachteilig, als die resultierenden Teilstrahlen eine entsprechend geringere Intensität aufweisen, die für bestimmte Bearbeitungsverfahren nicht ausreichend ist, und daß die Teilstrahlen darüberhinaus auch noch eine unterschiedliche Intensität aufweisen.

Verwendet man die Laserstrahlen beispielsweise zur Perforierung von Papier, ist es zur Erzielung einer gleichmäßigen Lochgröße und -güte unbedingt erforderlich, eine bestimmte, relativ hohe und gleichbleibende Intensität des die Perforation durchführenden Laserstrahls sicherzustellen. In diesem Fall wäre eine Strahlteilung aus den vorgenannten Gründen ungünstig.

Es ist bereits eine Vorrichtung zur Behandlung eines Substrates mittels Laserstrahl bekannt, bei der ein kontinuierlicher Laserstrahl in ein optisches Spiegelsystem eingeleitet wird, das aus mehreren hintereinander rotierenden Scheiben besteht, die reflektierende und durchlässige Segmente aufweisen. Das System liefert dadurch eine Vielzahl von Lichtwegen, die durch die unterschiedliche Kombination reflektierender und lichtdurchlässiger Segmente gebildet werden. Der in das System eingeleitete Strahl wird entsprechend der jeweiligen Winkelposition der Scheiben schrittweise in die verschiedenen Lichtwege eingeleitet und dabei der Strahl nacheinander auf verschiedene Zielpunkte geworfen. Mit einer derartigen Anordnung ist es beispielsweise möglich, ein mit hoher Geschwindigkeit die Vorrichtung durchlaufendes Papierband mit quer zur Transportrichtung liegenden Lochreihen zu versehen. Die bekannte Vorrichtung weist jedoch verschiedene Nachteile auf. Da auf den Scheiben nur begrenzt viele Lochkombinationen Platz finden, kann keine beliebig hohe Perforationsfrequenz erreicht werden. Da die Strahlenwege unterschiedliche Länge haben, bestehen hinsichtlich der Fokussierung auf dem Substrat Schwierigkeiten.

Weiterhin ist eine Erfindung bekannt (FR-A-2 130 698), bei welcher ein eintretender Laserstrahl durch einen drehenden Polygonspiegel über eine Reihe von nebeneinanderliegenden, fokussierenden Elementen geschwenkt wird, wodurch aufeinanderfolgend eine entsprechende Anzahl von Zielpunkten beaufschlagt wird.

Diese Anordnung erlaubt es zwar, eine größere Anzahl von Zielpunkten mit sehr kurzen Laserpulsen bei hoher Folgefrequenz zu beaufschlagen, aber zur Perforation eines Substrates mit kleinen und runden Löchern ist sie ungeeignet. Während nämlich der Strahl ein einzelnes, fokussierendes Element überstreicht, wandert der Fokuspunkt auf dem Substrat mit. Dadurch erhält man längliche Löcher.

Der Erfindung liegt die Aufgabe zugrunde, eine Vorrichtung der eingangs bezeichneten Art zu schaffen, die Laserpulse mit hoher Folgefrequenz zur Substratbehandlung liefert, die einfach aufgebaut ist und mit einem Minimum an sich bewegenden Teilen auskommt.

Diese Aufgabe wird bei einer Vorrichtung zur Behandlung eines Substrates mittels Laserstrahlen durch einen Drehspiegel gelöst, dessen reflektierende Fläche in der Brennebene einer ersten, zwischen Laserstrahlquelle und Spiegel angeordneten Sammellinse liegt, und durch ein erstes System mehrerer unmittelbar nebeneinander angeordneter Sammellinsen, die vom durch den Spiegel abgelenkten Laserstrahl überstrichen werden, und deren Brennebenen ebenfalls auf der reflektierenden Fläche des Spiegels liegen, und durch ein im weiteren Strahlengang angeordnetes System von fokussierenden Sammellinsen, die jeweils einer Sammellinse des ersten Systems zugeordnet sind, und deren Brennebenen auf der Oberfläche des zu behandelnden Substrats liegen.

Erfindungsgemäß wird also der Laserstrahl zunächst durch eine erste Sammellinse fokussiert auf den Drehspiegel geworfen und überstreicht dann intermittierend ein aus mehreren Sammellinsen gleicher Brennweite bestehendes erstes Linsensystem. Der Abstand des ersten Linsensystems vom Drehspiegel entspricht der Brennweite der einzelnen Linsen. Dem ersten Linsensystem nachgeordnet befinden sich eine Reihe von Fokussierlinsen, die jeweils einer der Linsen des ersten Systems zugeordnet sind, und die den parallelen Lichtstrahl auf ein Substrat, beispielsweise eine sich bewegende Papierbahn, fokussieren. Solange der Strahl eine Linse des ersten Systems überstreicht, bleibt die Intensität im Fokussierpunkt der zugehörigen Fokussierlinse konstant. Sie springt zum Fokussierpunkt der nächstfolgenden Fokussierlinse in dem Moment über, in dem der vom Drehspiegel abgelenkte Lichtstrahl die nächstfolgende Linse des ersten Linsensystems erreicht. In jedem Fokussierpunkt steht dabei die volle Intensität des ursprünglichen Laserlichtstrahls zur Verfügung. Verwendet man als Drehspiegel einen Polygonspiegel mit entsprechend vielen Facetten und hoher Drehzahl, können sehr hohe Frequenzen erreicht werden, so daß beispielsweise beim Einsatz der Vorrichtung zur Perforation von Zigarettenpapier der geschwindigkeitsbestimmende Faktor nicht mehr die Perforationsfrequenz sondern die technisch realisierbare Papiervorschubgeschwindigkeit oder die verfügbare Laserleistung ist.

Nachfolgend ist eine Ausführungsform der Erfindung unter Bezugnahme auf die beigefügte Zeichnung beschrieben. Es zeigen :

Figur 1 die perspektivische Ansicht der wesentlichen Funktionselemente der Vorrichtung in schematischer Darstellung, und

Figur 2 die schematische Darstellung des Strahlenganges in der Vorrichtung gemäß Fig. 1 in Draufsicht.

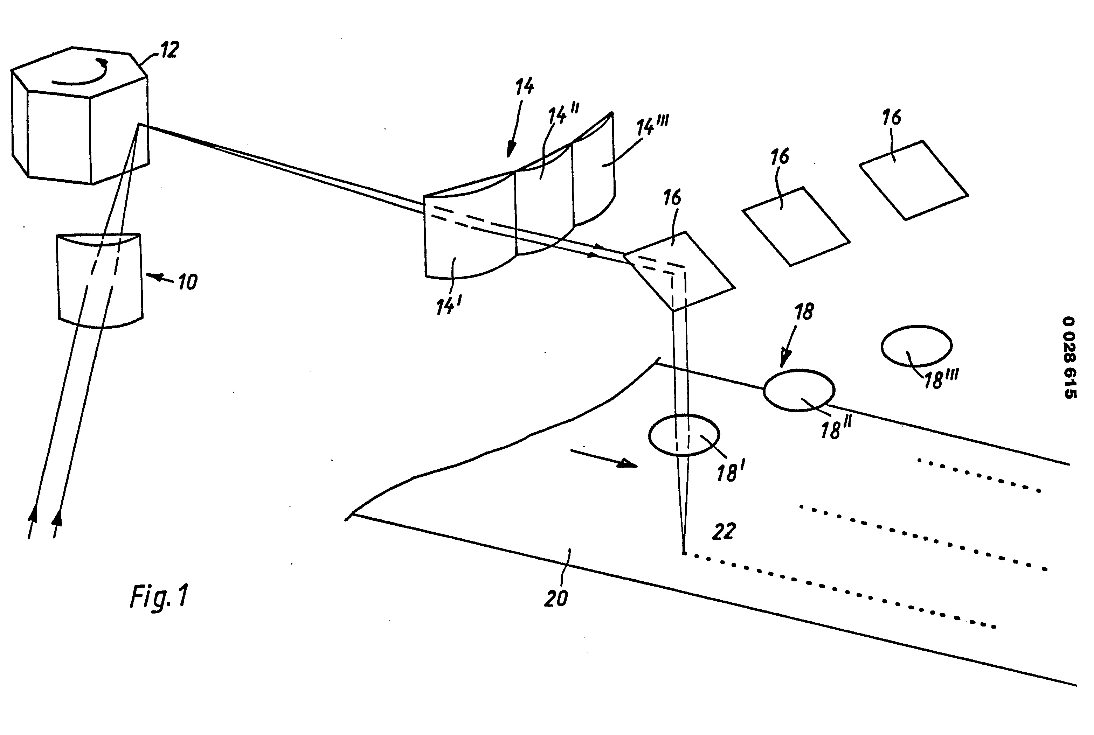

Gemäß Fig. 1 durchläuft der von einem Laser (nicht gezeigt) kommende Lichtstrahl eine erste Sammellinse 10, deren Brennpunkt- bzw. Strichebene auf einer Fläche des im Strahlengang hinter der Sammellinse 10 angeordneten Polygondrehspiegels 12 liegt. Der gezeigte Polygonspiegel weist sechs Facetten auf. Die Zahl der Facetten kann jedoch beliebig sein, sie hängt für eine vorgegebene Zerhackungsfrequenz auch von der mit dem Polygonspiegel erreichbaren Drehzahl ab.

Bei Drehung des Polygonspiegels wird der von einer Facette reflektierte Strahl einen bestimmten Winkelbereich überstreichen, tritt dann die nächste Facette in Wirkung, springt der Strahl zurück und überstreicht wieder den gleichen Winkelbereich. In diesem Bereich des vom Polygondrehspiegels reflektierten Strahls ist ein erstes Linsensystem 14, bestehend aus drei einzelnen Sammellinsen 14′, 14″, 14‴ angeordnet. Die Sammellinsen haben alle die gleiche Brennweite und eine solche Lage, daß ihr Brennpunkt bzw. ihre Brennebene mit dem Brennpunkt bzw. der -ebene der Sammellinse 10 auf dem Polygonspiegel zusammenfällt. Das die Linsen 14′ bis 14‴ verlassende Licht ist daher wieder parallel gerichtet.

In dem gezeigten Ausführungsbeispiel sind die Sammellinsen 10 und 14 als zylindrische Linsen gezeigt. Dies hat den Vorteil, daß der Drehspiegel 12 durch die hohe Energiedichte des Laserlichtstrahls nicht so stark belastet wird, da bekanntlich zylindrische Linsen in der Brennebene keinen Punkt, sondern eine Linie abbilden. Dieser Vorteil muß jedoch mit einer erhöhten Präzision bei der Lagerung des Polygonspiegels erkauft werden, da etwaige Taumelfehler des Spiegels bei der Verwendung zylindrischer Linsen naturgemäß stärker ins Gewicht fallen als bei Verwendung sphärischer Sammellinsen, die auf dem Spiegel nur einen Brennpunkt abbilden.

Die das erste Linsensystem 14 verlassenden Lichtstrahlen werden bei dem in Fig. 1 gezeigten Ausführungsbeispiel durch Umlenkspiegel 16 um 90° abgelenkt. Eine solche Ablenkung kann aus konstruktiven Gründen bei bestimmten Anwendungsfällen erforderlich sein. Für die Funktion der Vorrichtung ist sie an sich nebensächlich.

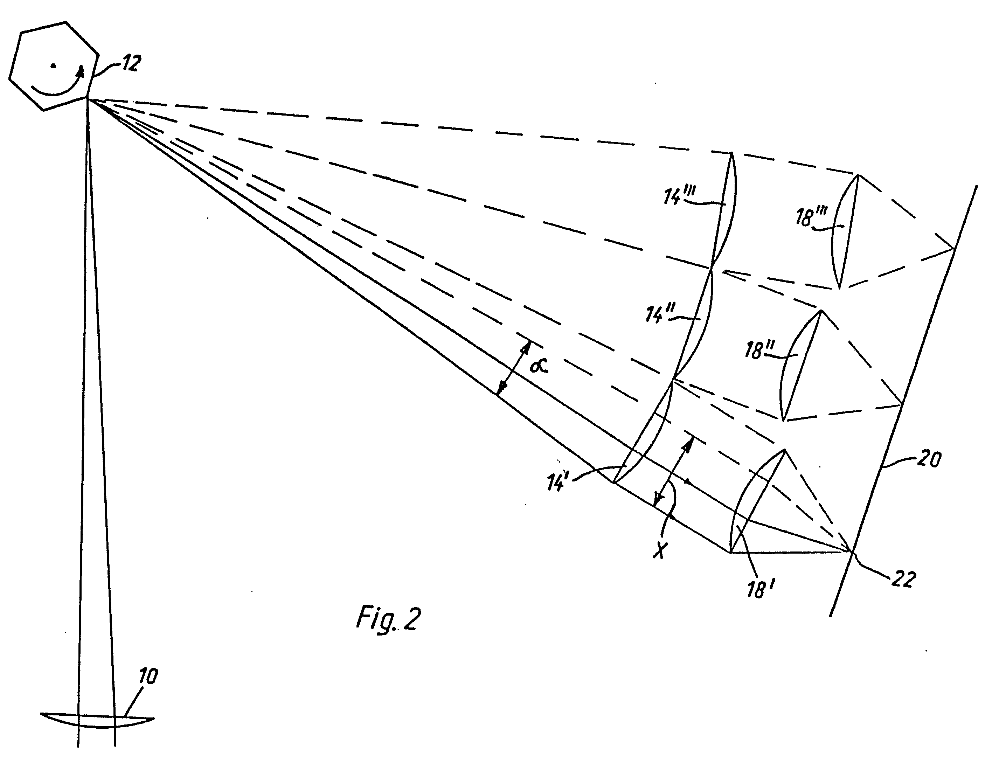

Nach den Umlenkspiegeln 16 ist ein System fokussierender Linsen 18 vorgesehen, das aus einzelnen sphärischen Sammellinsen besteht, welche die auf sie auftreffenden parallelen Lichtstrahlen auf eine unter bzw. im Strahlengang hinter dem Linsensystem 18 liegende Papierbahn 20 fokussieren. Der Abstand des Linsensystems 18 von der Papierbahn 20 entspricht also der Brennweite der einzelnen Sammellinsen 18′, 18″ und 18‴. Die Größe der Einzellinsen des Systems 18 sollte vorzugsweise der Größe der Einzellinsen des Systems 14 entsprechen, damit jedem Linsenabschnitt der Linsen 14′ bis 14‴ ein entsprechender Abschnitt der Linsen 18′ bis 18‴ zugeordnet ist. Diese Entsprechung ergibt sich klar aus Fig. 2, bei der zur besseren Verdeutlichung die Umlenkspiegel zwischen dem Linsensystem 14 und 18 weggelassen wurden.

Aus Fig. 2 ergibt sich mit hinreichender Deutlichkeit, daß bei einem Überstreichen des Winkelbereichs α das die Linse 14′ verlassende Strahlenbündel um den Betrag X parallel verschoben wird. Die Sammellinse 18′ muß eine solche Größe aufweisen, daß sie das Lichtbündel über den gesamten Bereich seiner Parallelverschiebung X immer im Brennpunkt 22 fokussiert.

Der erfindungsgemäße Gegenstand wird vorzugsweise zur Perforierung von Zigarettenpapier verwendet. Die Perforierung erfolgt dabei mit einer Frequenz, die der normalen Papiervorschubgeschwindigkeit handelsüblicher Maschinen entspricht.

Bei einer Papiergeschwindigkeit von beispielsweise 300 m/min und einem geforderten Lochabstand von 0,2 mm muß die Folgefrequenz der Laserpulse etwa 25 kHz betragen. Die Folgefrequenz kann über die Anzahl der Facetten des Polygondrehspiegels 12 und dessen Drehzahl nahezu beliebig eingestellt werden.

Erhöht man die Folgefrequenz oder erniedrigt die Bandgeschwindigkeit solange, bis die Löcher überlappen, so erfolgt keine Lochung des Papierbandes 20, sondern ein Auftrennen in mehrere parallele Bahnen. Man erreicht auf diese Weise praktisch eine « Strahlteilung », ohne die üblicherweise mit einer solchen Strahlteilung verbundenen Nachteile, wie ungleiche Intensität und verringerte Intensität in Kauf nehmen zu müssen. Im vorliegenden Fall steht jeweils die volle Intensität des ursprünglichen Laserlichtstrahls zur Verfügung.

**Ansprüche**

1. Vorrichtung zur Behandlung eines Substrates mittels Laserstrahlen, mit der ein eintretender Laserstrahl in verschiedene Ausgangsstrahlwege gelenkt werden kann, mit einem Drehspiegel (12) zum Schwenken eines von einer Laserstrahlquelle kommenden Laserstrahls über ein System von nebeneinander angeordneten, fokussierenden Sammellinsen (18), deren Brennebenen auf der Oberfläche eines zu behandelnden Substrats (20) liegen, dadurch gekennzeichnet, daß zwischen Laserstrahlquelle und Drehspiegel (12) eine erste Linseneinheit (10) angeordnet ist, die den Laserstrahl auf die Reflexionsfläche des Drehspiegels (12) fokussiert und daß hinter dem Drehspiegel (12) ein erstes System nebeneinander angeordneter Sammellinsen (14) angeordnet ist, deren Brennebenen ebenfalls auf der Reflexionsebene des Drehspiegels (12) liegen, so daß das System der fokussierenden Sammellinsen (18) mit parallelen Lichtstrahlen bei konstantem Einfallswinkel beaufschlagt ist.

2. Vorrichtung nach Anspruch 1, dadurch gekennzeichnet, daß die erste Linseneinheit (10)' und das erste System nebeneinander angeordneter Sammellinsen (14) zwischen denen der Drehspiegel (12) liegt, zylindrische Sammellinsen sind.

3. Vorrichtung nach Anspruch 1 oder 2, dadurch gekennzeichnet, daß zwischen den fokussierenden Sammellinsen (18) und dem ersten System nebeneinander angeordneter Sammellinsen (14) Umlenkspiegel (16) angeordnet sind.

## Claims

1. A device for treating a substrate by means of laser beams, with which an incoming laser beam may be directed into various output beam paths, comprising a revolving mirror (12) to direct a laser beam coming from a laser beam source onto a system of focussing convex lenses (18) arranged side by side, the focal planes of which are on the surface of a substrate to be treated (20), characterized in that between the laser beam source and the revolving mirror (12) there is a first lens unit (10) which focusses the laser beam onto the reflecting surface of the revolving mirror (12), and behind the revolving mirror (12) there is a first system of convex lenses (14) arranged side by side, the focal planes of which are also on the reflecting plane of the revolving mirror (12), so that the system of focussing convex lenses (18) is acted upon by parallel light rays at a constant angle of incidence.

2. A device as in claim 1, characterized in that the first lens unit (10) and the first system of convex lenses (14) arranged side by side, between which the revolving mirror (12) is located, are cylindrical convex lenses.

3. A device as in claim 1 or 2, characterized in that deviation mirrors (16) are arranged between the focussing convex lenses (18) and the first system of convex lenses (14) arranged side by side.

## Revendications

1. Dispositif de traitement d'un substrat par faisceaux laser, permettant de défléchir un faisceau laser entrant dans différentes directions de sortie, comportant un miroir tournant 12 pour balayer un faisceau laser provenant d'une source cohérente sur un système de lentilles 18 convergentes et focalisantes, disposées l'une à côté de l'autre et dont les plans focales coïncident avec la surface d'un substrat 20 à traiter, caractérisé par le fait qu'une première unité de lentilles 10 est disposée entre la source cohérente et le miroir tournant 12 pour focaliser le faisceau laser sur la paroi réfléchissante du miroir tournant, et qu'un premier système de lentilles convergentes 14, placées l'une à côté de l'autre, est disposé derrière le miroir tournant 12 et dont les plans focales sont également compris dans la paroi réfléchissante du miroir tournant 12 de sorte que le système de lentilles convergentes et focalisantes 18 soit soumis à des faisceaux lumineux parallèles à angle d'entrée constant.

2. Dispositif selon la revendication 1, caractérisé par le fait que la première unité de lentilles 10 et le premier système de lentilles convergentes 14, placées l'une à côté de l'autre, et enfermant le miroir tournant 12, sont des lentilles convergentes cylindriques.

3. Dispositif selon les revendications 1 ou 2, caractérisé par le fait que des miroirs de déflexion 16 sont disposés entre les lentilles convergentes et focalisantes 18 et le premier système de lentilles convergentes 14, placées l'une à côté de l'autre.

Fig.1

0 028 615

Fig. 2

0 028 615